# EUROPÄISCHE PATENTSCHRIFT

(11) **EP 3 016 837 B1**
(45) Veröffentlichungstag und Bekanntmachung des Hinweises auf die Patenterteilung: **01.04.2020**
(21) Anmeldenummer: 14724073.3
(22) Anmeldetag: 13.05.2014
(51) Int. Cl.: B62D 15/02, B60W 30/06

(54) **PARKASSISTENZSYSTEM UND VERFAHREN ZUR STEUERUNG EINES PARKASSISTENZSYSTEMS FÜR EIN FAHRZEUG**
PARKING ASSISTANCE SYSTEM AND METHOD FOR CONTROLLING A PARKING ASSISTANCE SYSTEM FOR A VEHICLE
SYSTÈME D'ASSISTANCE AU STATIONNEMENT ET PROCÉDÉ DE COMMANDE D'UN SYSTÈME D'ASSISTANCE AU STATIONNEMENT D'UN VÉHICULE

(30) Priorität: 05.07.2013 DE 102013213225
(43) Veröffentlichungstag der Anmeldung: 11.05.2016
(73) Patentinhaber: Robert Bosch GmbH, 70442 Stuttgart (DE)
(72) Erfinder: HEIGELE, Christian, 70435 Stuttgart (DE); MIELENZ, Holger, 73760 Ostfildern (DE)
(86) Internationale Anmeldenummer: PCT/EP2014/059728
(87) Internationale Veröffentlichungsnummer: WO 2015/000620

(56) Entgegenhaltungen:
- DE-A1-102007 002 262
- DE-A1-102010 030 208

## Beschreibung

Die Erfindung betrifft ein Verfahren nach dem Oberbegriff von Anspruch 1 zur Steuerung eines Parkassistenzsystems für ein Fahrzeug, insbesondere für ein Kraftfahrzeug, wobei vom Parkassistenzsystem ein gespeichertes Park- oder Rangiermanöver entlang einer Trajektorie bereitgestellt wird, insbesondere eine gespeicherte Trajektorie abgerufen wird, und wobei über eine Anzeigevorrichtung dem Fahrer die Trajektorie aus einer Startposition bis zu einer Zielposition des Fahrzeuges und Umgebungsobjekte dargestellt werden, und wobei wenigstens ein nicht mit der Trajektorie abgespeichertes Hindernis, das zwischen der Startposition und der Zielposition vor dem Fahrzeug liegt, dem Fahrer angezeigt wird. Zudem betrifft die Erfindung ein Parkassistenzsystem nach dem Oberbegriff des Anspruchs 7 für ein Fahrzeug, insbesondere für ein Kraftfahrzeug, zur Durchführung eines teilautomatischen oder automatischen Park- oder Rangiervorgangs entlang einer gespeicherten Trajektorie, insbesondere unter Verwendung des erfindungsgemäßen Verfahrens, umfassend Mittel zur Erfassung von Umgebungsobjekten, wenigstens eine Anzeigevorrichtung und wenigstens ein HMI-Element als Schnittstelle zwischen einem Fahrer des Fahrzeuges und dem Parkassistenzsystem.

### STAND DER TECHNIK

Parkassistenzsysteme und Verfahren zur Steuerung von Parkassistenzsystemen für Fahrzeuge, insbesondere für Kraftfahrzeuge, welche ein zumindest teilautomatisch durchführbares Fahrmanöver des Fahrzeuges ermöglichen, umfassen beispielsweise Dreh-/Drucksteller, Touchscreens oder durch Gestik oder Spracheingabe steuerbare Bedienelemente, die zur Vorgabe einer Fahrzeugzielposition oder einer Kraftfahrzeugzielposition dienen. Darüber hinaus umfassen die bekannten Parkassistenzsysteme zur Erfassung der Umgebung Sensoren, die am Fahrzeug angeordnet sind. Geeignete Sensoren, die dazu eingesetzt werden können, sind zum Beispiel Ultraschallsensoren, Radarsensoren, LIDAR-Sensoren, kapazitive Sensoren oder videobasierte Sensoren. Neben Sensoren, die am Fahrzeug angebracht sind, werden zur Erfassung der Umgebung des Fahrzeuges auch Informationen aus digitalen Karten, von Positionierungssensoren, beispielsweise GPS-Sensoren oder Inertialsensoren, Informationen aus einem Datenspeicher oder Informationen über telemediale Dienste genutzt. Als Anzeigevorrichtung dient bei den bekannten Parkassistenzsystemen zumeist ein Monitor, beispielsweise der Monitor eines Navigationsgerätes. Aus dem Stand der Technik sind darüber Verfahren zum teil- oder vollautomatischen Rangieren eines Fahrzeuges, insbesondere eines Kraftfahrzeuges, aus einer Startposition in eine Zielposition bekannt. Als Rangierverfahren werden beispielsweise Verfahren zur Unterstützung eines Fahrers für das Einparken des Fahrzeuges in eine Parklücke oder das Rangieren des Fahrzeuges auf eine Rampe verstanden. Das Einparken des Fahrzeuges in die Parklücke oder das Rangieren des Fahrzeuges auf eine Rampe kann dabei entweder vorwärts oder rückwärts erfolgen. Bei Fahrzeugen, deren Räder sich quer in Fahrtrichtung verstellen lassen, kann das Einparken des Fahrzeuges auch seitlich erfolgen.

Auf die Festlegung der Zielposition des Fahrzeuges durch den Fahrer erfolgt eine Bestimmung einer Trajektorie zum Erreichen der Zielposition oder es wird über das Parkassistenzsystem eine Trajektorie abgerufen, die beispielsweise für wiederkehrende Park- oder Rangiersituationen im System abgespeichert ist. Beispielsweise kann das Anfahren des häuslichen Parkplatzes als HomeZone Trajektorie im Parkassistenzsystem gespeichert und über dieses abgerufen werden. Der Fahrer erhält dann entweder Anweisungen, um der HomeZone Trajektorie zu folgen, oder es erfolgt eine automatische Führung des Fahrzeuges entlang der HomeZone Trajektorie bis hin zu der markierten oder gespeicherten Zielposition.

Ein häufiges Problem beim Anfahren von gespeicherten Zielpositionen entlang von dafür errechneten und gespeicherten Trajektorien ist das Auftreten von Hindernissen. Handelt es sich bei den Hindernissen um dynamische Objekte, dass heißt um Passanten oder andere Fahrzeuge, die durch die Fahrzeugsensorik beispielsweise beim Abfahren der HomeZone Trajektorie detektiert werden, wird vom Parkassistenzsystem in der Regel ein Bremsmanöver ausgeführt oder es erfolgt eine Neuberechnung der Trajektorie, um dem dynamischen Objekt auszuweichen. Allerdings ist ein reines Bremsmanöver zumeist ausreichend, da aufgrund der Dynamik des Objekts, dieses den Trajektorienpfad verlässt, so dass das Manöver entlang der HomeZone Trajektorie, ohne diese neu zu berechnen, fortgesetzt werden kann.

Aus der DE 10 2007 027 438 A1 ist ein Verfahren zur Steuerung eines Parkassistenzsystems für Fahrzeuge bekannt. Bei dem bekannten Verfahren kann vorgesehen sein, dass das Parkassistenzsystem das Fahrzeug auf einer gespeicherten Trajektorie aus einer Parklücke heraus fährt. Darüber hinaus ist aus diesem Dokument bekannt, dass bei einer Detektion eines Hindernisses das auf der gespeicherten Trajektorie automatische Herausfahren des Fahrzeuges abgebrochen wird. In diesem Fall kann mit Unterstützung durch den Fahrer semiautomatisch weitergefahren werden oder der Fahrer kann das Herausfahren und Umfahren des Hindernisses komplett übernehmen. Semiautomatisch im Sinne des aus der der DE 10 2007 027 438 A1 bekannten Verfahren bedeutet dabei insbesondere, dass der Fahrer die Steuerung der Geschwindigkeit des Fahrzeugs übernimmt.

Die DE 10 2008 002 598 A1 offenbart eine Vorrichtung zur semiautonomen Unterstützung einer Lenkbewegung eines Fahrzeuges. Dabei kann durch die bekannte Vorrichtung ein Fahrmanöver bei einer Lernfahrt gespeichert und zu einem späteren Zeitpunkt in derselben Umgebung wieder ausgeführt werden. Darüber hinaus ist die Vorrichtung gemäß der DE 10 2008 002 598 A1 dahingehend ausgestaltet, dass Umfeldsensoren vorgesehen sind und basierend auf deren Sensordaten mögliche Kollisionsgefahren mit Hindernissen erkannt werden können. Bei Erfassung von Hindernissen kann eine automatische Abänderung des Fahrmanövers dahingehend durchgeführt werden, dass die Kollisionsgefahr vermieden werden kann, wobei das neue Fahrmanöver dem Fahrer vorgeschlagen oder autonom von der Vorrichtung durchgeführt werden kann.

Schließlich offenbart die DE 10 2010 030 208 A1 ein Verfahren zur Unterstützung eines Fahrers eines Kraftfahrzeuges bei einem Fahrmanöver, wobei der Fahrer eine Unterstützung für notwendige Lenkeinstellungen und zur Längsführung erhält, um das Fahrmanöver durchzuführen. Dazu werden entweder dem Fahrer von einem Fahrassistenzsystem Anweisungen zur Durchführung der notwendigen Lenkeinstellung und zur Längsführung gegeben, oder die Lenkeinstellung und gegebenenfalls die Längsführung werden vom Fahrassistenzsystem automatisch durchgeführt. Tritt eine mögliche Kollision mit einem Objekt während der Durchführung eines vom Fahrassistenzsystem geplanten Fahrmanövers auf, werden vom Fahrassistenzsystem automatisch Standardmanöver bereitgestellt oder diese können vom Fahrer angefordert werden. Durch die Aktivierung standardisierter Fahrmanöver ist nur ein geringer Interaktionsbedarf zwischen dem Fahrassistenzsystem und dem Fahrer notwendig, weshalb auch nur eine minimale Mensch-Maschine-Schnittstelle notwendig ist, die nur wenige Eingabemittel, wie beispielsweise Tasten oder Knöpfe benötigt. Wird bei der semiautomatischen oder selbsttätigen Durchführung eines Standardmanövers ein Objekt auf Kollisionskurs detektiert, wird eine Bremsung eingeleitet und es erfolgt eines Neuberechnung des Fahrweges, um eine Kollision mit dem Objekt zu vermeiden.

Bei den bekannten Verfahren, bzw. bei der bekannten Vorrichtung zur semi- oder vollautomatischen Unterstützung eines Fahrers eines Kraftfahrzeuges bei einem Park- oder Rangiermanöver oder bei einem vom Fahrassistenzsystem abrufbaren Standardmanövers ist nachteilig, dass diese beim Auftauchen von semi-dynamischen Objekten, durch eine vom Parkassistenzsystem ausgeführte automatische Bremsung des Fahrzeuges das Abfahren der HomeZone Trajektorie blockiert wird bzw. eine Neuberechnung der Trajektorie benötigt wird, um das semi-dynamische Hindernis zu umfahren. Die Neuberechnung der Trajektorie erfordert dabei ein komplexes Umfeldmodell, das speicher- und rechenintensiv ist, und das eine hochwertige und kostenintensive Umfeldsensorik benötigt.

Als semi-dynamische Objekte werden vorliegend bewegliche Hindernisse, wie beispielsweise Fahrräder oder Mülltonnen verstanden, die tagesweise oder situativ anders gestellt werden können.

### OFFENBARUNG DER ERFINDUNG

Aufgabe der Erfindung ist es, ein geeignetes Verfahren zur Steuerung eines Parkassistenzsystems zur Unterstützung eines Fahrers eines Fahrzeuges, insbesondere eines Kraftfahrzeuges, bei einem teilautomatischen oder automatischen Park- oder Rangiervorgangs der eingangs genannten Gattung zur Verfügung zu stellen, welches bei einem Auftreten eines Hindernisses, insbesondere eines semi-dynamischen Objektes, beim Abfahren auf einer Trajektorie durch eine einfache Anweisung das Umfahren des Hindernisses und insbesondere des semi-dynamischen Objektes erlaubt, ohne dabei eine kostenintensive Umfeldsensorik am Fahrzeug zur Neuberechnung der Trajektorie zu benötigen.

Ferner soll der Fahrer über eine Schnittstelle eine Eingabe tätigen können, ob das Hindernis links oder rechts umfahren werden soll. Dabei soll sich die Eingabe durch den Fahrer von einer allgemeinen Richtungsanweisung bis zu einer Vorgabe einer kompletten Umfahrungstrajektorie bzw. Ausweichtrajektorie erstrecken.

Diese Aufgabe wird ausgehend von einem Verfahren zur Steuerung eines Parkassistenzsystems gemäß dem Oberbegriff des Anspruchs 1 in Verbindung mit dessen kennzeichnenden Merkmalen gelöst. Des Weiteren wird diese Aufgabe ausgehend von einem Parkassistenzsystem, insbesondere unter Verwendung der Steuerung gemäß dem erfindungsgemäßen Verfahren, gemäß dem Oberbegriff des Anspruchs 6 in Verbindung mit dessen kennzeichnenden Merkmalen gelöst. Vorteilhafte Weiterbildungen der Erfindung sind in den abhängigen Ansprüchen angegeben.

Diese Lösung bietet den Vorteil, dass der Fahrer bei Anzeige eines Hindernisses insbesondere eines semi-dynamischen Objektes, dass in der abgerufenen Trajektorie nicht gespeichert ist, durch eine einfache Interaktion mit dem Parkassistenzsystem über ein HMI-Element ein Lenkmanöver des Fahrzeuges anweisen kann, um das Hindernis zu umfahren.

Basierend auf der Eingabe des Fahrers wird gemäß dem erfindungsgemäßen Verfahren eine neue Trajektorie für das Fahrmanöver errechnet, auf der eine Kollision mit dem Hindernis vermieden werden kann. Vorteil der Erfindung ist somit ein Komfortgewinn für den Fahrer des Fahrzeugs, da ein abgespeichertes Fahrzeugmanöver auch bei einem Hindernis erfolgreich durchgeführt werden kann. Darüber hinaus kann, da die Richtungsentscheidung dem Fahrer überlassen wird, auf aufwendige Sensorik und Berechnungseinheiten verzichtet werden, wodurch sowohl Entwicklungs- als auch Fertigungskosten eingespart werden können.

Um die Bewegung des Fahrzeuges beispielsweise entlang einer gespeicherten HomeZone Trajektorie aus der Startposition in die Zielposition visuell darzustellen, ist es zweckmäßig, die vom Parkassistenzsystem berechnete und abgespeicherte HomeZone Trajektorie, entlang der das Fahrzeug bewegt werden muss, um die Zielposition aus der Startposition zu erreichen, auf der Anzeigevorrichtung darzustellen. Darüber hinaus ist es vorteilhaft Umgebungsobjekte zumindest andeutungsweise auf der Anzeigevorrichtung darzustellen.

In vorteilhafter Weise wird neben der Start- und Zielposition, sowie der Trajektorie auch das semi-dynamische Objekt bzw. das Hindernis, welches auf dem Trajektorienpfad liegt, auf der Anzeigevorrichtung visuell dargestellt. Dadurch das das semi-dynamische Objekt, auf dem Trajektorienpfad liegend, visuell dargestellt wird, und der Fahrer darüber hinaus Umgebungsobjekte auf der Anzeigevorrichtung dargestellt bekommt, kann der Fahrer anhand dieser Darstellungen sofort entscheiden, wie das semi-dynamische Objekt zu umfahren ist, ohne dabei auf Kollisionskurs mit den Umgebungsobjekten zu gelangen.

Vorteilhaft ist, dass der Fahrer, der verantwortlich für das Abfahren beispielsweise der HomeZone Trajektorie ist, durch seine menschliche Einschätzung und Fahrpraxis bestimmen kann, wie das semi-dynamische Objekt zu umfahren ist. Dabei reicht zumeist die Einschätzung aus, ob das semi-dynamische Objekt rechts- oder linksseitig umfahren werden kann. Denn zumeist handelt es sich bei den semi-dynamischen Objekten um sehr kleine Objekte, die zudem häufig am Rand des Trajektorienpfades, also der gespeicherten und angezeigten Trajektorie stehen.

Wird jedoch vom Fahrer keine Interaktion vorgenommen, weil er beispielsweise keine Lösung zum Umfahren bzw. zum Umsteuern des semi-dynamischen Objektes findet, wird das Fahrzeug vorteilhaft in seiner Startposition vom Parkassistenzsystem gehalten, um eine Kollision mit dem Hindernis zu vermeiden. Der Fahrer erhält in diesem Fall in bevorzugter Weise die Möglichkeit, das vom Parkassistenzsystem eingeleitete Parkmanöver, durch seinen Eingriff in die Längs- oder Querführung des Fahrzeuges abzubrechen und kann so die Führung des Fahrzeuges aus der Startposition in die Zielposition manuell steuern.

Wie bereits beschrieben, ist es vorteilhaft, die Ausweichbewegung des Fahrzeuges auf der Anzeigevorrichtung darzustellen. In besonders vorteilhafter Weise wird dabei das Ausweichmanöver des Fahrzeuges um das semi-dynamische Objekt herum, und insbesondere die Fahrtrichtung des Fahrzeuges, in die dieses die angezeigte Trajektorie verlässt, auf der Anzeigevorrichtung dargestellt.

Bei dem HMI-Element kann es sich im einfachsten Fall um am Lenkrad oder an der Armaturtafel angeordnete Rechts- Linkstasten oder um einen Dreh-Drucksteller handeln, mit denen der Fahrer die Informationen rechts oder links an das Parkassistenzsystem eingeben kann, insbesondere in Verbindung mit einer Anzeigevorrichtung, beispielsweise einem Monitor oder einem Display in der Fahrgastzelle und insbesondere im Instrumentencockpit. Natürlich kann es sich bei dem Monitor oder Display, beispielsweise auch um einen Monitor oder Display eines Navigationsgerätes, eines Smartphones oder eines Tablet-PCs handeln. Um eine Eingabe einer gewünschten Ausweichbewegung des Fahrzeuges direkt auf der Anzeigevorrichtung zu ermöglichen, ist es besonders bevorzugt, wenn die Eingabe der Richtungsanweisung, um das Hindernis bzw. das semi-dynamische Objekt zu umfahren, über einen berührungsempfindlichen Bildschirm erfolgt. In einer besonders vorteilhaften Weise kann es sich bei der Anzeigevorrichtung um ein sogenanntes "Head-up-Display" handeln, bei dem für den Fahrer wichtige Informationen in sein Haupt-Sichtfeld projiziert werden, so dass er seine Kopfhaltung bzw. Blickrichtung kaum ändern muss.

Als Eingabemittel für das Ausweichmanöver des Fahrzeuges in Kombination mit der Anzeigevorrichtung ist natürlich auch eine berührungsempfindliche Fläche, ein sogenanntes Touchpad denkbar, welches beispielsweise wie der Dreh-Drucksteller oder die Rechts- Linkstasten in der Instrumententafel des Armaturencockpit oder in der Mittelkonsole in der Fahrgastzelle eines Fahrzeuges angeordnet sein können.

Als HMI-Element ist natürlich auch das Lenkrad in Verbindung mit einer Anzeigevorrichtung denkbar. Dabei ist vorteilhaft, dass es dem Fahrer durch seine Fahrpraxis bekannt ist, dass er durch das Drehen des Lenkrades oder durch Bewegung der Lenksteuerung, also durch einen Lenkvorgang, die Fahrtrichtung des Fahrzeuges verändert. Daher ist die Verwendung der Lenksteuerung, insbesondere die Verwendung des Lenkrades, als Bedienvorrichtung zur Eingabe der Ausweichtrajektorie des Fahrzeuges um das semi-dynamischen Objekt herum und gegebenenfalls die Vorgabe des Zurückführens des Fahrzeuges auf die gespeicherte Trajektorie dem Fahrer intuitiv zugänglich. Als Lenksteuerung wird dabei eine Vorrichtung zur Fahrtrichtungsänderung eines Fahrzeuges verstanden. Dabei kann es sich beispielsweise um eine Joystick-Steuerung und insbesondere um ein Lenkrad eines Fahrzeuges handeln.

Insbesondere durch die geübte Eingabe und Bedienung an berührungsempfindlichen Monitoren oder Displays, beispielsweise bei Smartphones oder Tablet-PCs, erfolgt in vorteilhafter Weise die Eingabe der Richtungsanweisung zur Umfahrung des semi-dynamischen Objektes und gegebenenfalls die Vorgabe des Zurückführens des Fahrzeuges auf die gespeicherte Trajektorie anhand einer Wischbewegung durch den Fahrer. In bevorzugter Weise wird die Wischbewegung dabei dem Fahrer visualisiert. Durch die durch den Fahrer ausgeführte Wischbewegung bzw. die Wischinformation erhält das Parkassistenzsystem die Anweisung, das Fahrzeug, die HomeZone Trajektorie auf eine Ausweichtrajektorie verlassend, um das semi-dynamische Objekt herum zu lenken, bzw. herum zu tasten. Auf diese Weise wird in bevorzugter Weise der Lenkwinkel des Fahrzeuges immer weiter in die vorgegebene Richtung gedreht, bis das Hindernis nicht mehr in dem abzufahrenden Pfad des Fahrzeuges liegt.

Vorteilhafterweise wird nach dem Umfahren des Hindernisses das Fahrzeug automatisch und insbesondere ohne eine erneute Anweisung durch den Fahrer selbsttätig durch das Parkassistenzsystem zurück auf den Trajektorienpfad gelenkt.

Natürlich ist es auch denkbar, dass der Fahrer über die Wischbewegung sowohl die Ausweichtrajektorie als auch das Zurückführen von der Ausweichtrajektorie auf die HomeZone Trajektorie bestimmt. Der Fahrer zeichnet demnach den gesamten Ausweichpfad, ab dem das Fahrzeug die HomeZone Trajektorie zu verlassen hat und zu dieser hinter dem semi-dynamischen Hindernis wieder zurückkehrt. Sobald sich das Fahrzeug wieder auf der HomeZone Trajektorie befindet, wird der bekannte Regelmodus, d.h. das Parkassistenzsystem unterstützte Einparken oder Rangieren des Fahrzeuges in die Zielposition wieder aktiviert.

Zur Darstellung der Umgebungsobjekte auf der Anzeigevorrichtung werden vorteilhaft Informationen von Sensoren zur Erfassung von Umgebungsobjekten, welche am Fahrzeug angebracht sind, Informationen aus digitalen Karten, Informationen von Positionierungssensoren, insbesondere GPS-Sensoren oder Inertialsensoren, Informationen aus einem Datenspeicher und/oder Informationen über telemediale Dienste ausgewertet. Als Mittel zur Erfassung von Umgebungsobjekten werden Vorrichtungen oder Informationen verstanden, die am Fahrzeug angebracht sind, oder die aus einem Datenspeicher, beispielsweise dem Fahrzeug-CAN abrufbar sind. Darüber hinaus werden als Mittel zur Erfassung von Umgebungsobjekten Vorrichtungen verstanden, die nicht am Fahrzeug angebracht sind, oder die aus einer außerhalb des Fahrzeuges liegenden Informationsquelle abrufbar sind. Die einzelnen Mittel zur Erfassung von Umgebungsobjekten und die Informationen können jeweils einzeln oder in jedweder Kombination verwendet werden.

Bei den zu erfassenden Umgebungsobjekten kann es sich beispielsweise um Bordsteinkanten, die Hindernisse darstellen, parkende Fahrzeuge, Gebäude, Wände oder Mauern, sich bewegende Objekte, wie andere Verkehrsteilnehmer, einmündende Straßen, Rampen oder Pflanzen und insbesondere auch um Hindernisse, wie beispielsweise semi-dynamische Objekte, die auf der Trajektorie zwischen der Startposition und der Zielposition liegen, handeln.

Um Wiederholungen bezüglich der Vorteile des erfindungsgemäßen Parkassistenzsystems zu vermeiden, wird auf die vorteilhafte Ausgestaltung des erfindungsgemäßen Verfahrens verwiesen und es wird vollumfänglich auf dieses zurückgegriffen.

### Bevorzugtes Ausführungsbeispiel

Weitere, die Erfindung verbessernde Maßnahmen werden nachstehend gemeinsam mit der Beschreibung eines bevorzugten Ausführungsbeispiels der Erfindung anhand der Figur näher dargestellt:
Es zeigt:

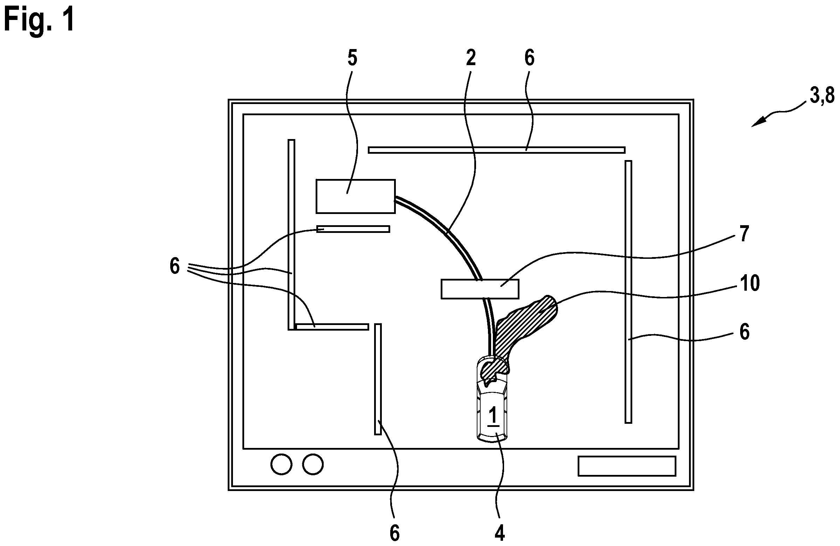

- Fig. 1: eine Darstellung des Fahrzeuges in der Startposition auf einer HomeZone Trajektorie mit einem zwischen dem Fahrzeug und der Zielposition stehenden semi-dynamischen Objekt auf einer Anzeigevorrichtung aus der Vogelperspektive.

Figur 1 zeigt eine Anzeigevorrichtung 3 in Form eines berührungsempfindlichen Monitors eines Parkassistenzsystems für ein Fahrzeug 1 zur Durchführung des erfindungsgemäßen Verfahrens. Aus der Vogelperspektive ist das Fahrzeug 1 virtuell in einer Startposition 4, die der Istposition des Fahrzeuges 1 entspricht, dargestellt. Das Fahrzeug soll einer gespeicherten und vom Parkassistenzsystem vorgegebenen Trajektorie 2 aus der Startposition 4 in eine Zielposition 5 folgen. Um das Fahrzeug 1 herum sind Umgebungsobjekte 6 angezeigt, die durch eine nicht dargestellte Sensorik oder durch Informationen aus digitalen Karten, Informationen von Positionierungssensoren, insbesondere GPS-Sensoren oder Inertialsensoren, Informationen aus einem Datenspeicher und/oder Informationen über telemediale Dienste ausgewertet und berechnet wurden.

Auf der Trajektorie 2 behindert vorliegend ein Hindernis 7 das Fahrmanöver, das vom Parkassistenzsystem berechnet wurde. Um das Hindernis 7 zu umfahren bzw. um dem Hindernis 7 auszuweichen, berührt der Fahrer des Fahrzeuges das als berührungsempfindlicher Monitor ausgebildete HMI-Element 8 und führt eine Wischbewegung 10 in die Richtung auf dem Monitor aus, in die sich das Fahrzeug 1 zum Umfahren des Hindernisses 7 bewegen soll. In vorteilhafter Weise wird die Wischbewegung 10 auf der Anzeigevorrichtung 3 festgehalten und dient damit der Wischinformation für den Fahrer.

Vorliegend erfüllt der berührungsempfindliche Monitor demnach zum einen die Aufgabe als Anzeigevorrichtung 3, um dem Fahrer die Trajektorie 2, Umgebungsobjekte 6, die Start- 4 und Zielposition 5, die Wischbewegung 10 sowie das auf der Trajektorie liegende Hindernis 7 anzuzeigen. Zum anderen dient der berührungsempfindliche Monitor der Anzeigevorrichtung 3 auch als HMI-Element 8, also als Schnittstelle zwischen dem Fahrer und dem Parkassistenzsystem, um eine Eingabe oder Anweisung durch den Fahrer ausführen zu können.

Wie in der Figur dargestellt erfolgt eine Richtungsangabe bzw. Richtungsinformation durch die Wischbewegung 10 auf dem berührungsempfindlichen Monitor nach rechts.

Das Fahrzeug 1 umfährt daraufhin nach Berechnung der Ausweichtrajektorie vom Parkassistenzsystem das Hindernis 7 in der vom Fahrer durch die Wischbewegung 10 vorgegebenen Richtung, nämlich wie dargestellt durch ein Verlassen der gespeicherten und abgerufenen Trajektorie 2 nach rechts. Nachdem das Hindernis 7 umfahren ist, wird das Fahrzeug 1 wieder auf die Trajektorie 2 zurückgeführt und kann in die vorgegebene Zielposition 5 vom Parkassistenzsystem geführt werden, bzw. diese anfahren.

## Patentansprüche

1. Verfahren zur Steuerung eines Parkassistenzsystems für ein Fahrzeug (1), insbesondere für ein Kraftfahrzeug, wobei vom Parkassistenzsystem ein gespeichertes Park- oder Rangiermanöver entlang einer Trajektorie (2) bereitgestellt wird, insbesondere eine gespeicherte Trajektorie (2) abgerufen wird, und wobei über eine Anzeigevorrichtung (3) dem Fahrer die Trajektorie (2) aus einer Startposition (4) bis zu einer Zielposition (5) des Fahrzeuges (1) und Umgebungsobjekte (6) dargestellt werden, und wobei wenigstens ein nicht mit der Trajektorie (2) abgespeichertes Hindernis (7), das zwischen der Startposition (4) und der Zielposition (5) vor dem Fahrzeug (1) liegt, dem Fahrer angezeigt wird,
**dadurch gekennzeichnet, dass** der Fahrer durch eine Eingabe über ein HMI-Element (8) dem Parkassistenzsystem anweist, wie das Hindernis (7) vom Fahrzeug (1) zu umfahren ist,
wobei durch die Eingabe oder die Anweisung des Fahrers vom Parkassistenzsystem eine Ausweichtrajektorie zur Umfahrung des Hindernisses (7) und ein Zurückführen des Fahrzeuges (1) auf die gespeicherte Trajektorie (2) berechnet werden.

2. Verfahren nach Anspruch 1,
**dadurch gekennzeichnet, dass** es sich bei dem Hindernis (7) um ein semidynamisches Objekt handelt.

3. Verfahren nach Anspruch 1 oder 2,
**dadurch gekennzeichnet, dass** die Eingabe oder die Anweisung durch den Fahrer über einen Rechts-Linksschalter, ein Touchpad, einen berührungsempfindlichen Monitor (9) oder über einen Dreh-Drucksteller erfolgt.

4. Verfahren nach einem der vorhergehenden Ansprüche,
**dadurch gekennzeichnet, dass** der Fahrer alternativ zu der angewiesenen und vom Parkassistenzsystem berechneten Ausweichtrajektorie und dem berechneten Zurückführen des Fahrzeuges (1) auf die gespeicherte Trajektorie (2), durch die Eingabe oder die Anweisung über das HMI-Element (8) die Ausweichtrajektorie und das Zurückführen des Fahrzeuges (1) auf die gespeicherte Trajektorie (2) selbsttätig bestimmt.

5. Verfahren nach einem der vorhergehenden Ansprüche,
**dadurch gekennzeichnet, dass** der Fahrer die Eingabe oder Anweisung als Wischbewegung auf dem Touchpad oder dem berührungsempfindlichen Monitor ausführt.

6. Parkassistenzsystem für ein Fahrzeug (1), insbesondere für ein Kraftfahrzeug, zur Durchführung eines teilautomatischen oder automatischen Park- oder Rangiervorgangs entlang einer gespeicherten Trajektorie (2), insbesondere unter Verwendung des erfindungsgemäßen Verfahrens zur Steuerung eines Parkassistenzsystems nach einem der vorhergehenden Ansprüche, umfassend Mittel zur Erfassung von Umgebungsobjekten (6), wenigstens eine Anzeigevorrichtung (3) und wenigstens ein HMI-Element (8) als Schnittstelle zwischen einem Fahrer des Fahrzeuges (1) und dem Parkassistenzsystem,
**dadurch gekennzeichnet, dass** bei Erfassung und Anzeige eines Umgebungsobjektes (6), das als Hindernis (7) auf der gespeicherten Trajektorie (2) liegt, das HMI-Element (8) zur Eingabe oder zur Anweisung einer Richtung durch den Fahrer zum Umfahren oder zum Ausweichen des Hindernisses (7) dient
wobei durch die Eingabe oder die Anweisung des Fahrers vom Parkassistenzsystem eine Ausweichtrajektorie zur Umfahrung des Hindernisses (7) und ein Zurückführen des Fahrzeuges (1) auf die gespeicherte Trajektorie (2) berechnet werden.

## Claims

1. Method for controlling a parking assistance system for a vehicle (1), in particular for a motor vehicle, wherein the parking assistance system makes available a stored parking manoeuvre or positioning manoeuvre along a trajectory (2), in particular a stored trajectory (2) is retrieved, and wherein the trajectory (2) from a starting position (4) up to a target position (5) of the vehicle (1) and objects (6) in the surroundings are displayed to the driver by means of a display device (3), and wherein at least one obstacle (7) which is not stored with the trajectory (2) and which is located between the starting position (4) and the target position (5) before the vehicle (1) is displayed to the driver,
**characterized in that** the driver instructs, by means of an input using an HMI element (8), to the parking assistance system how the vehicle (1) is to drive around the obstacle (7),
wherein an avoidance trajectory for driving around the obstacle (7) and returning the vehicle (1) to the stored trajectory (2) is calculated by the parking assistance system by means of the input or the instruction by the driver.

2. Method according to Claim 1,
**characterized in that** the obstacle (7) is a semi-dynamic object.

3. Method according to Claim 1 or 2,
**characterized in that** the input or the instruction are issued by means of the driver using a right-hand/lefthand switch, a touchpad, a touch-sensitive monitor (9) or using a push and turn actuator.

4. Method according to one of the preceding claims,
**characterized in that**, as an alternative to the avoidance trajectory which is in the instruction and is calculated by the parking assistance system and the calculated return of the vehicle (1) to the stored trajectory (2), the driver automatically determines the avoidance trajectory and the return of the vehicle (1) to the stored trajectory (2) by inputting or issuing an instruction via the HMI element (8).

5. Method according to one of the preceding claims,
**characterized in that** the driver executes the inputting of issuing of an instruction as a working movement on the touchpad or the touch-sensitive monitor.

6. Parking assistance system for a vehicle (1), in particular for a motor vehicle, for carrying out a partially automatic or automatic parking or manoeuvring process along a stored trajectory (2), in particular using the method according to the invention for controlling a parking assistance system according to one of the preceding claims, comprising means for detecting objects (6) in the surroundings, at least one display device (3) and at least one HMI element (8) as an interface between a driver of the vehicle (1) and the parking assistance system,
**characterized in that** when an object (6) in the surroundings, which is located as an obstacle (7) on the stored trajectory (2), is detected and displayed, the HMI element (8) serves to input or to issue an instruction about a direction by the driver for driving around or for avoiding the obstacle (7),
wherein by means of the input or the issuing of an instruction by the driver the parking assistance system calculates an avoidance trajectory for driving around the obstacle (7) and returning the vehicle (1) to the stored trajectory (2).

## Revendications

1. Procédé de commande d'un système d'assistance au stationnement pour un véhicule (1), notamment pour un véhicule automobile, une manœuvre de stationnement ou de mouvement mémorisée le long d'une trajectoire (2) étant mise à disposition par le système d'assistance au stationnement, une trajectoire (2) mémorisée étant notamment invoquée, et la trajectoire (2) à partir d'une position de départ (4) jusqu'à une position de destination (5) du véhicule (1) ainsi que des objets environnants (6) étant représentés au conducteur par le biais d'un dispositif d'affichage (3), et au moins un obstacle (7) non mémorisé avec la trajectoire (2), lequel se trouve devant le véhicule (1) entre la position de départ (4) et la position de destination (5), étant affiché à l'attention du conducteur,
**caractérisé en ce que** le conducteur donne une instruction au système d'assistance au stationnement par une saisie par le biais d'un élément HMI (8) concernant comment l'obstacle (7) doit être contourné par le véhicule (1), une trajectoire d'évitement destinée à contourner l'obstacle (7) et un retour du véhicule (1) sur la trajectoire (2) mémorisée étant calculés par le système d'assistance au stationnement par le biais de la saisie ou de l'instruction du conducteur.

2. Procédé selon la revendication 1, **caractérisé en ce que** l'obstacle (7) est un objet semi-dynamique.

3. Procédé selon la revendication 1 ou 2, **caractérisé en ce que** la saisie ou l'instruction par le conducteur est effectuée par le biais d'un commutateur droite-gauche, d'un pavé tactile, d'un moniteur à commande tactile (9) ou par le biais d'un organe de réglage rotatif et à enfoncer.

4. Procédé selon l'une des revendications précédentes,
**caractérisé en ce que** le conducteur, en variante de la trajectoire d'évitement et du retour du véhicule (1) sur la trajectoire (2) mémorisée donnés comme instruction et calculés par le système d'assistance au stationnement, détermine lui-même la trajectoire d'évitement et le retour du véhicule (1) sur la trajectoire (2) mémorisée par la saisie ou l'instruction par le biais de l'élément HMI (8).

5. Procédé selon l'une des revendications précédentes,
**caractérisé en ce que** le conducteur réalise la saisie ou l'instruction sous la forme d'un mouvement de balayage sur le pavé tactile ou le moniteur à commande tactile.

6. Système d'assistance au stationnement pour un véhicule (1), notamment pour un véhicule automobile, destiné à réaliser une manœuvre de stationnement ou de mouvement partiellement automatique ou automatique le long d'une trajectoire (2) mémorisée, notamment en utilisant le procédé selon l'invention de commande d'un système d'assistance au stationnement selon l'une des revendications précédentes, comprenant des moyens pour détecter des objets environnants (6), au moins un dispositif d'affichage (3) et au moins un élément HMI (8) en tant qu'interface entre un conducteur du véhicule (1) et le système d'assistance au stationnement,
**caractérisé en ce que** lors de la détection et de l'affichage d'un objet environnant (6) qui se trouve en tant qu'obstacle (7) sur la trajectoire (2) mémorisée, l'élément HMI (8) sert à la saisie ou à l'instruction d'une direction par le conducteur pour contourner ou pour éviter l'obstacle (7)
une trajectoire d'évitement destinée à contourner l'obstacle (7) et un retour du véhicule (1) sur la trajectoire (2) mémorisée étant calculés par le système d'assistance au stationnement par le biais de la saisie ou de l'instruction du conducteur.
